# EUROPEAN PATENT SPECIFICATION

(11) **EP 4 660 363 B1**
(45) Date of publication and mention of the grant of the patent: **18.11.2026**
(21) Application number: 23950661.1
(22) Date of filing: 28.08.2023
(51) Int. Cl.: D05B 33/00, B25J 15/06, B25J 18/02

(54) **PICKUP ARM OF TRANSFER DEVICE**
AUFNAHMEARM EINER ÜBERTRAGUNGSVORRICHTUNG
BRAS DE RAMASSAGE DE DISPOSITIF DE TRANSFERT

(43) Date of publication of application: 10.12.2025
(73) Proprietor: Eleven International Co., Ltd., Matsubara-shi, Osaka, 580-0016 (JP)
(72) Inventor: ITAKURA Tsuyoshi, Matsubara-shi, Osaka 580-0016 (JP); MURAKAMI Shigenori, Kobe-shi, Hyogo 651-2144 (JP)
(74) Representative: HKW Intellectual Property PartG mbB
(86) International application number: PCT/JP2023/031025
(87) International publication number: WO 2025/046710

(56) References cited:
- CN-A- 103 255 376
- CN-U- 203 611 246
- JP-A- 2014 226 735
- JP-A- 2023 091 709
- JP-A- H0 881 053
- JP-A- H1 095 018
- JP-A- S6 263 043
- US-A- 5 657 710
- US-B2- 6 796 588

## Description

### BACKGROUND OF THE INVENTION

### 1. Field of the Invention:

The present invention relates to a transfer apparatus transferring parts, obtained as a result of a sheet being cut, to a next stage.

### 2. Description of the Prior Art:

A work of picking up parts of a sewn product obtained as a result of cutting performed by a cutting device and transferring the parts to a next stage needs to be performed accurately with certainty. Otherwise, trouble is caused to the work thereafter, and inconveniences occur such that, for example, defective products are generated or the work is delayed. Therefore, the present Applicant proposed a transfer apparatus, disclosed in JP 2023-91709 A, that picks up parts of various shapes with certainty and transfers the parts efficiently.

The transfer apparatus disclosed in JP 2023-91709 Aincludes a movable body reciprocating between an original position thereof and a transfer destination, and a pickup arm provided on the movable body. The pickup arm includes an extendable arm having a changeable length, and an adsorption hand provided at a tip of the extendable arm and connected with a negative pressure source generating an absorption force. At the original position of the movable body, the extendable arm is extended to a predetermined position to adsorb and hold a necessary part with the adsorption hand. After this, the movable body is moved to the transfer destination. The length of the extendable arm is adjusted when necessary, and then the part is released from the adsorption hand.

The extendable arm of the pickup arm has a so-called multi-stage slide structure including a plurality of movable arms stacked in an up-down direction. A motor as a driving source for the extension is connected with the lowermost movable arm. That is, when the motor is driven, all the movable arms except for the lowermost movable arm are slid at the same time in association with each other via a transmission mechanism included in each of the movable arms, and thus the extendable arm is extended.

The extendable arm is secured such that a position thereof is not changeable in the up-down direction with respect to the movable body. The movement in the up-down direction, which is needed for the pickup work, is performed by the adsorption hand at the tip thereof. Specifically, the uppermost movable arm of the extendable arm is held at a predetermined height at which the uppermost movable arm is not too close to an upper surface of a table on which the parts are to be placed and thus allows the parts to be picked up and released. The adsorption hand is provided at a bottom end of an elevation pipe extending in the up-down direction. Therefore, a portion of an air absorption path, connecting the adsorption hand and the negative pressure source, the portion being on the side of the adsorption hand, is formed of a flexible tube, and one end thereof is directed downward and is connected with a top end of the elevation pipe.

As can be seen, the pickup arm needs to be provided at a relatively high position, and the elevation pipe and the tube extend upward therefrom. Therefore, a portion, of the transfer apparatus, in which the pickup arm is located is inevitably large and at a high position.

In addition, the elevation tube and the tube, which extend vertically, are provided at the tip of the extendable arm, which extends horizontally. Therefore, the pickup arm tends to lack shape stability and compactness. In order to realize a stable operation of the pickup arm, the extendable arm and the adsorption hand need to be sufficiently strong. However, an increase in the thickness of each of these members, made in an attempt to obtain rigidity, also increases the weight thereof. This is disadvantageous for a transfer apparatus, which is required to be driven highly precisely and smoothly.

### [Prior Art Document]

CN 203 611 246 U discloses an industrial robot, which comprises a cabinet, an arm swinging movement mechanism, an arm lifting movement mechanism and a grasping rotating movement mechanism, wherein the arm swinging movement mechanism is driven through a first servo motor and a first speed reducer; the arm lifting movement mechanism is arranged on a swinging main shaft, swings along with the swinging main shaft, and is driven through a second servo motor, a second shaft coupling, a ball screw and a screw nut sleeve; an arm is arranged on the screw nut sleeve; the grasping rotating movement mechanism is arranged on the arm; a grasping component of the grasping rotating movement mechanism is driven to rotate through a third servo motor and a first synchronizing wheel component. The industrial robot also comprises a movement controller electrically connected with a human-computer interface operation box, wherein the output end of the movement controller is electrically connected with the first, second and third servo motors respectively.

JP S62-63043 A discloses an industry robot device wherein a suction hood capable of folding freely is arranged in such a manner that it covers a working tool attached to the tip of a working hand. When a drill tool is engaged with a work by lowering a working boom, the suction hood is also lowered and its tip comes close to the work, therefore a part to be machined is surrounded by the suction hood. When a suction pump is actuated as soon as the work is started, e.g. chip powder, smoke, steam and the like generated during work are absorbed and discharged by air absorbing from the air suction opening of a suction tube.

### SUMMARY OF THE INVENTION

### [Problems to be Solved by the Invention]

The present invention has a main object of providing a pickup arm, of a transfer apparatus, that is more compact and more lightweight and has a higher shape stability.

### [Means for Solving the Problems]

For the above-described object, the present invention proposes a pickup arm with the features of claim 1.

A pickup arm is provided in a movable body of a transfer apparatus picking up parts obtained as a result of a sheet being cut and transferring the parts to a next stage. The pickup arm includes an extendable arm having a changeable length; and an adsorption hand provided at a tip of the extendable arm and connected with a negative pressure source generating an absorption force. The extendable arm includes a plurality of links stacked in an up-down direction, and an actuator connected with a base link, which is an uppermost link among the plurality of links, the actuator moving the other links in a longitudinal direction thereof to extend and contract the extendable arm. The base link is secured to a top end of an elevatable member provided on the movable body so as to be movable in the up-down direction. A base portion of an extendable pipe, having a telescopic structure and acting as a part of an air absorption path continued to the negative pressure source, is secured to a portion, of the elevatable member, that is below the base link. A tip link, which is a lowermost link among the plurality of links included in the extendable arm, is held at a tip of the extendable pipe. According to the invention, the pickup arm moreover comprises a support structure provided on a support portion holding the extendable pipe, the support structure changing a level of the support portion.

With this configuration, the extendable arm has a configuration by which the links are moved in association from top to bottom, that is, from the uppermost base link to the lowermost tip link. It is not necessary to extend and contract the extendable arm while supporting the extendable arm from below. Therefore, the load to be supported is made more lightweight as compared with a configuration in which the links are moved in association from bottom to top. In addition, the extendable pipe secured to the elevatable member, like the extendable arm, holds the tip link to alleviate the supporting load on the extendable arm and stably supports the extendable arm. The elevatable member moves the extendable arm in the up-down direction together with the extendable pipe, and thus makes it unnecessary to provide the adsorption hand with an elevation function.

### [Advantageous Effect of the Invention]

According to the present invention, the extendable arm has a configuration by which the links are moved in association from top to bottom, and the extendable arm is provided on the elevatable member. Therefore, there is no need to provide the extendable arm at a high position. There is no need to provide the adsorption hand at the tip of the extendable arm with an elevation function, either. Therefore, a portion, in the transfer apparatus, where the pickup arm is located is made compact and thin.

In addition, the extendable arm has a configuration in which the links other than the base link, secured to the elevatable member, are suspended from the base link. Such a configuration alleviates the load to be supported, and therefore, the pickup arm is made compact and lightweight. The extendable arm is provided on the elevatable member so as to be movable in the up-down direction. This makes it unnecessary to provide the adsorption hand with an elevation function. This also contributes to the reduction in size and weight of the pickup arm.

The tip link of the extendable arm is held at the tip of the extendable pipe secured to the elevatable member together with the extendable arm. This makes the pickup arm compact and lightweight and also improves the shape stability thereof. In addition, the extendable pipe, which is originally provided for the air absorption path, is used for the extendable arm. Therefore, there is no need to provide a separate member, and this also makes the pickup arm compact.

As a result, the pickup arm operates more accurately and more smoothly.

A conventional extendable arm has a configuration in which the lowermost movable arm is used as a basic element, and the movable arms above the lowermost arm are slid. Therefore, it is difficult to change the number of the movable arms to change the stroke. This will be described specifically. The adsorption hand at the tip needs to be moved up and down. Therefore, when the number of the movable arms is increased or decreased from the original design, the level of the uppermost movable arm is changed. This makes it necessary to change the elevation stroke of the adsorption hand. This requires a significant modification including the change of an elevatable pipe. By contrast, according to the present invention, the pickup operation is performed by the movement of the extendable arm in the up-down direction. Therefore, the pickup operation is not influenced even when the height of the extendable arm is changed, that is, the number of the links to be used is changed. This allows the number of the links to be increased or decreased to change the stroke easily and with little load when necessary.

### BRIEF DESCRIPTION OF DRAWINGS

FIG. 1 is a partially cut partial side view of a pickup arm according to an embodiment.
FIG. 2 is a schematic plan view of a transfer apparatus.
FIG. 3 is a front view of movable bodies arranged side by side as seen from the side of a tip of the pickup arms.
FIG. 4 is a schematic side view showing an operation of an extendable arm and an adsorption hand.
FIG. 5 is a partially cut side view showing a support portion holding an extendable pipe and a support structure therefor.
FIG. 6 is a plan view of an operation of the adsorption hands.

### DESCRIPTION OF THE PREFERRED EMBODIMENTS

Hereinafter, an embodiment of the present invention will be described with reference to the drawings.

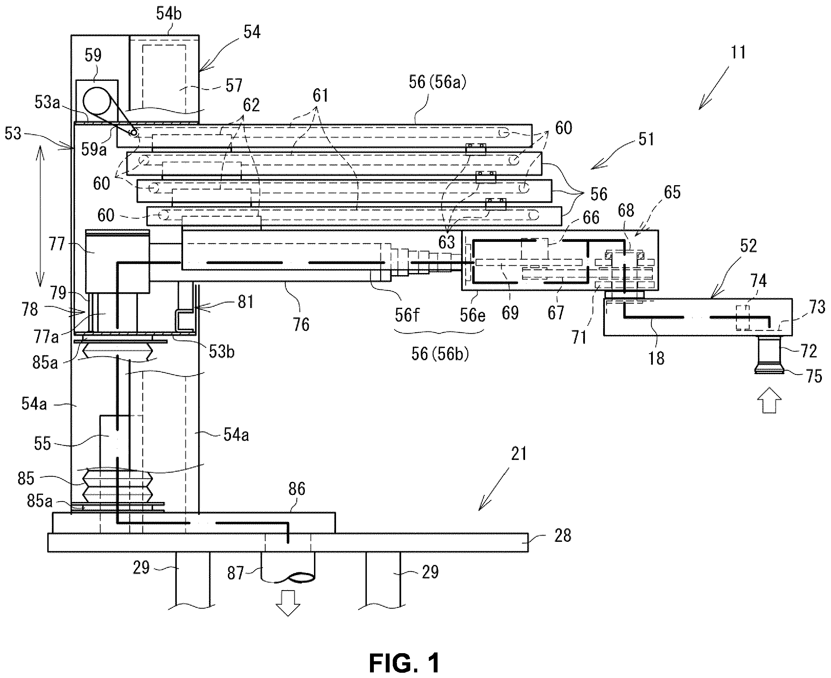

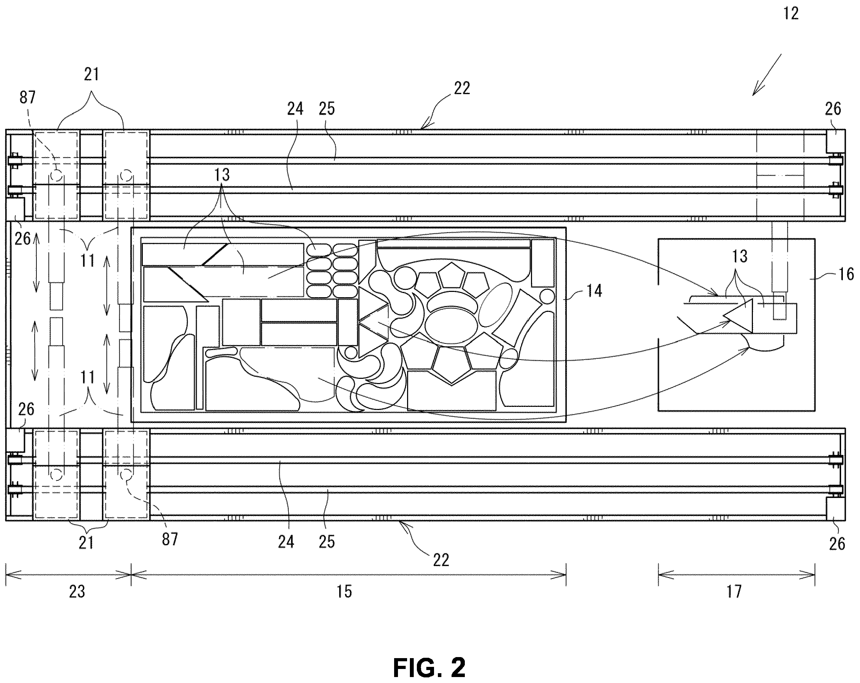

FIG. 1 is a partial side view of a pickup arm 11 according to an embodiment of the present invention. The pickup arm 11 is included in a transfer apparatus 12 shown in FIG. 2, which is a plan view of the transfer apparatus 12. The transfer apparatus 12 picks up a plurality of parts 13 placed on one same plane as a result of a sheet being cut, and transfers the parts 13 to a next stage.

In FIG. 2, the parts 13 are shown as being transferred on a straight line from left to right. The parts 13 obtained as a result of the cutting are placed on a first-stage table 14 shown in a left part of FIG. 2. The parts 13 obtained as a result of the cutting performed by a cutting device (not shown) may wait on the first-stage table 14 after being moved thereto by a conveyer with no change in the positional arrangement thereof, or the parts 13 may be cut on the first-stage table 14. A portion, of the transfer apparatus 12, including the first-stage table 14 will be referred to as a "first-stage portion 15". The cutting device cuts the sheet based on graphical data input thereto.

The parts 13 picked up are stacked in a predetermined order and placed on a second-stage table 16 shown in a right part of FIG. 2. Among the parts 13 picked up, necessary parts 13 are arranged on the second-stage table 16 before the parts 13 are bonded together. A portion, of the transfer apparatus 12, including the second-stage table 16 will be referred to as an assembly-stage portion 17". The assembly-stage portion 17 is the stage next to the first-stage portion 15. In the assembly-stage portion 17, the parts 13 are stacked on the second-stage table 16 in an orderly manner, or alternatively, may be accommodated in an appropriate box. Still alternatively, the parts 13 may be arranged so as to be in a predetermined positional relationship. The parts 13 may be laid out so as to be bonded together in a next stage.

The transfer apparatus 12 shown in FIG. 2 is preferred to be used for the production of various sewn products such as seat covers and airbags of automobiles, clothes, footwear, bags and the like. Among the parts 13 obtained as a result of the cutting, necessary parts 13 are picked up in an orderly manner with no human errors, and transferred to the next stage.

The transfer apparatus 12 includes a movable body 21 movable between a first stage and a second stage, in other words, the first-stage portion 15 and the assembly-stage portion 17. The pickup arm 11 is mounted on the movable body 21.

A plurality of the movable bodies 21, specifically, two movable bodies 21, are provided on each of two sides of a straight transfer line connecting the first-stage portion 15 and the assembly-stage portion 17. More specifically, rails 22 are provided on both of two sides of a direction perpendicular to the transfer line, and the movable bodies 21 are provided side by side on the rails 22. The rails 22 are each longer than a total length of the first-stage table 14 and the second-stage table 16. On the rails 22, a wait portion 23 is provided before the first-stage table 14. The movable bodies 21 wait in the wait portion 23 before being activated. Two annular belts 24 are respectively extended around the two rails 22, and two annular belts 25 are respectively extended around the two rails 22. Two driving motors 26 rotating the annular belts 24 and 25 forward and rearward are respectively connected with the rails 22. The two belts 24 and the two belts 25 are provided in correspondence with the movable bodies 21. The annular belts 24 are provided at inner positions closer to the first-stage table 14 and the second-stage table 16, and the annular belts 25 are provided at outer positions distanced away from the inner positions by a certain interval. The moving motors 26 are, for example, servo motors, stepping motors, or the like.

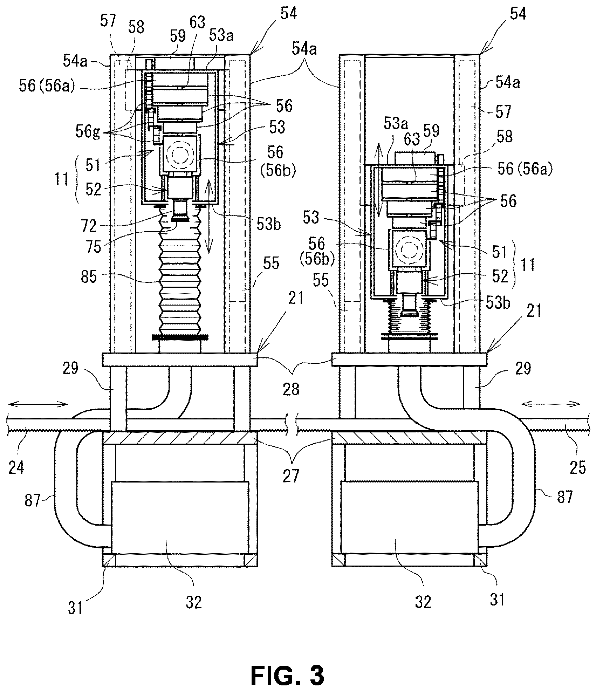

Each of the movable bodies 21 includes a bottom plate 27 (see FIG. 3) movably supported by the rail 22, a top plate 28 held above, and away from, the bottom plate 27, supports 29 coupling the bottom plate 27 and the top plate 28 to each other, and a cuboidal holding frame 31 extending downward from the bottom plate 27. A top surface of the bottom plate 27 is secured to top portions of the belts 24 and 25 provided on the rail 22. On each rail 22, two movable bodies 21 are independently movable in a reciprocating manner along the transfer line. A pump 32 as a negative pressure source is mounted on the holding frame 31.

FIG. 3 is a front view of a part of the plurality of movable bodies 21 in the wait portion 23, that is, the two movable bodies 21 shown in a top part of FIG. 2. The front view shown in FIG. 3 is as seen from a position between the rails 22 in an outward direction (upward in FIG. 2) (as seen from tips of the pickup arms 11). As shown in FIG. 3, one movable body 21 is joined with one belt 24 or 25. In the example shown in FIG. 3, the belt 24 located at the inner position is joined with the left movable body 21, and the belt 25 located at the outer position is joined with the right movable body 21. The belt 25 at the outer position slides on the bottom plate 27 of the left movable body 21, and similarly, the belt 24 at the inner position slides on the bottom plate 27 of the right movable body 21.

One pickup arm 11 is provided on one movable body 21. The pickup arm 11 includes an extendable arm 51 having a changeable length and an adsorption hand 52 provided at a tip of the extendable arm 51 and connected with the pump 32 generating an absorption force. The pickup arm 11 is movable in an up-down direction on the movable body 21. A longitudinal direction of the extendable arm 51 of the pickup arm 11 is perpendicular to the transfer line; that is, the extendable arm 51 is extendable and contractable in a direction perpendicular to the transfer line. The pickup arm 11 has a tip directed inward, that is, toward the first-stage table 14 and the like.

The pickup arm 11 is secured to an elevatable member 53 provided on the movable body 21. The elevatable member 53 is movable in the up-down direction. Specifically, as shown in FIG. 1 and FIG. 3, a support column 54 is provided to stand on the top plate 28 of the movable body 21, and the elevatable member 53 is supported inside the support column 54 so as to be movable in the up-down direction. The support column 54 includes a pair of, more specifically, left and right, columns 54a and a coupling portion 54b coupling top ends of the columns 54a. The elevatable member 53 has a size accommodated between the columns 54a and is shorter than the columns 54a. The elevatable member 53 has a box-like shape that is rectangular as seen from a front view thereof and has an opening running therethrough in a front-rear direction (direction in which the extendable arm 51 extends). One side surface of the elevatable member 53 is supported by an elevation mechanism 55 provided in one of the columns 54a. The elevation mechanism 55 is a linear servo motor. In FIG. 3, reference sign 57 represents a guide rail, and reference sign 58 represents a slider. A base portion of the pickup arm 11 is secured to a top end of the elevatable member 53 (see FIG. 1).

The extendable arm 51 includes a plurality of links 56 stacked in the up-down direction and are extendable and contractable in a horizontal direction so as to have a long stroke although occupying a small space when being contracted. The links 56 each have a cuboidal box shape. The link 56 on an uppermost stage is referred to as a base link 56a, and the link 56 on a lowermost stage is referred to as a tip link 56b. The base link 56a is connected with an extension motor 59 as an actuator that moves all the other links 56 in a longitudinal direction thereof, that is, that extends and contracts all the other links 56. The tip link 56b is provided with the adsorption hand 52.

As shown in FIG. 1 and FIG. 3, the extendable arm 51 includes three links 56 in addition to the base link 56a and the tip link 56b. The extendable arm 51 includes five links 56 in total. The links 56 other than the tip link 56b each have a hollow box shape longer in the longitudinal direction thereof. Each of the links 56 other than the tip link 56b each include a pair of pulleys 60 and a belt 61 wound along the pulleys 60 and extending in the longitudinal direction thereof. The pulleys 60 and the belt 61 are provided to form a transmission mechanism transmitting an input from the extension motor 59. The extension motor 59 is connected with the pulley 60, located at a base end of the base link 56a, via a belt 59a. The extension motor 59 is a servo motor, a stepping motor or the like, and is secured on a top plate 53a acting as a top surface of the elevatable member 53.

As shown in FIG. 1 and FIG. 3, the links 56 other than the tip link 56b do not have the same thickness (height) or the same width. A lower link 56 is thinner and narrow than the link 56 located directly above the lower link 56. In FIG. 3, reference sign 56g represents a flexible cable cover restricting and protecting cables.

The belt 61 built in each of the four links 56 is provided with joints coupling the links 56 to each other. There are two types of joints. One type of joint is a platelike first joint 62 slidable on a bottom surface of the link 56. The first joint 62 in one link 56 is secured to a top surface of the link 56 provided directly below the one link 56. In a contracted state shown in FIG. 1, the first joint 62 in one link 56 is provided in correspondence with a base end of the top surface of the link 56 provided directly below the one link 56. The other type of joint is a second joint 63. Two links 56 move with respect to each other via the first joint 62. The second joint 63 is secured to the belt 61 of the lower link 56 of these two links 56. The second joint 63 is provided in each of the links 56 other than the tip link 56b and the link 56 directly above the tip link 56b. The second joint 63 is provided at a tip end of the bottom surface of each of such links 56.

The tip link 56b has a hollow box shape, and a tip portion 56e of the tip link 56b has a greater height than that of the other links 56. A base portion 56f, of the tip link 56b, that is to the rear of the tip portion 56e has a prism shape having an opening in the bottom surface thereof. A reason why the tip portion 56e of the tip link 56b has a greater height than that of the other links 56 is that the tip portion 56e of the tip link 56e accommodates a rotation mechanism 65 rotating the adsorption hand 52 attached thereto. The rotation mechanism 65 rotates the adsorption hand 52 by 360 degrees horizontally. The rotation mechanism 65 includes a motor 66 and a cylindrical body 68. Belts 67 pivotable by the motor 66 extend along the cylindrical body 68 to rotate the cylindrical body 68 in the horizontal direction. The motor 66 and the cylindrical body 68 are respectively supported by support plates 69 and 71 secured in the tip portion 56e in the horizontal direction. There is a space between the support plates 69 and 71. An inner space of the cylindrical body 68 acts as an air flow path, and a bottom end of the cylindrical body 68 is joined with a top surface of one end of the adsorption hand 52. The adsorption hand 52 has a cuboidal box shape.

The adsorption hand 52 has a cylindrical adsorption opening 72 in a bottom surface of the other end thereof. The adsorption opening 72 of the adsorption hand 52 has an open/close shutter 73 provided at a top opening thereof. The open/close shutter 73 opens and closes the adsorption opening 72. The open/close shutter 73 is driven by an open/close shutter actuator 74, which is, for example, a solenoid. One such adsorption opening 72 is provided, and has a size appropriate to adsorb each of the parts 13. The adsorption opening 72 is provided with a necessary member such as a rubber adsorption pad 75 or the like at a tip thereof. Two or more adsorption openings 72 may be provided instead of one adsorption opening 72. The adsorption opening 72 has a shape, a size, a location or any other form defined in accordance with the parts 13.

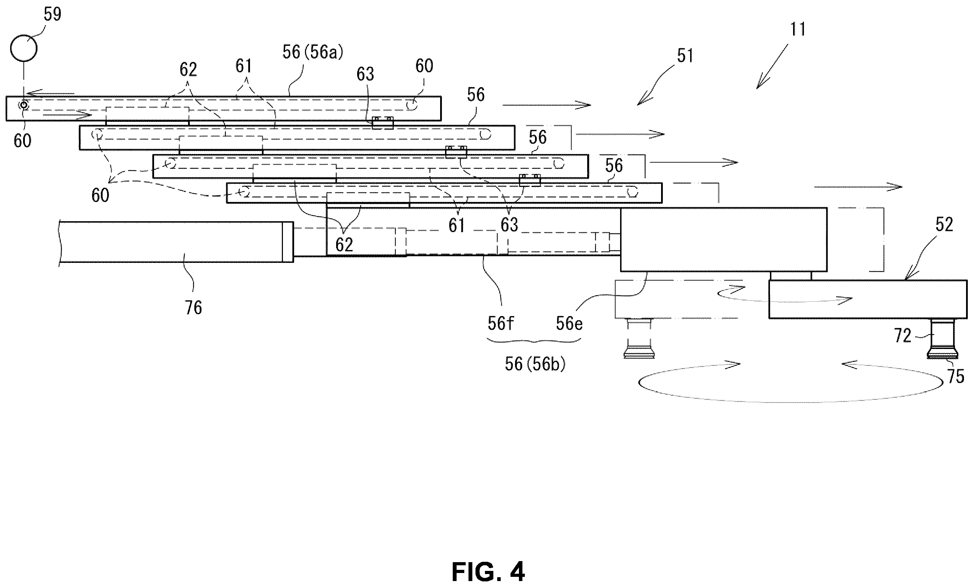

It is preferred that the adsorption hand 52 having such a configuration is relatively long in the horizontal direction. A reason for this is that with a long length, the adsorption hand 52, and the extension and contraction of the extendable arm 51, cooperate to enlarge the area in which the adsorption hand 52 is capable of adsorbing the parts 13. In the figures, the adsorption hand 52 has substantially the same length as that of the tip portion 56e of the tip link 56b (see FIG. 1 and FIG. 4).

The tip link 56b and the adsorption hand 52 are made airtight. That is, the tip link 56b and the adsorption hand 52 have outer surfaces thereof covered, and a space between the tip link 56b and the adsorption hand 52 is closed, with a sealing member or the like when necessary. With this arrangement, a continuous inner space of the tip link 56b and the adsorption hand 52 acts a part of an air absorption path 18 continued to the negative pressure source. In FIG. 1, the thick two-dot chain line represents the air absorption path 18.

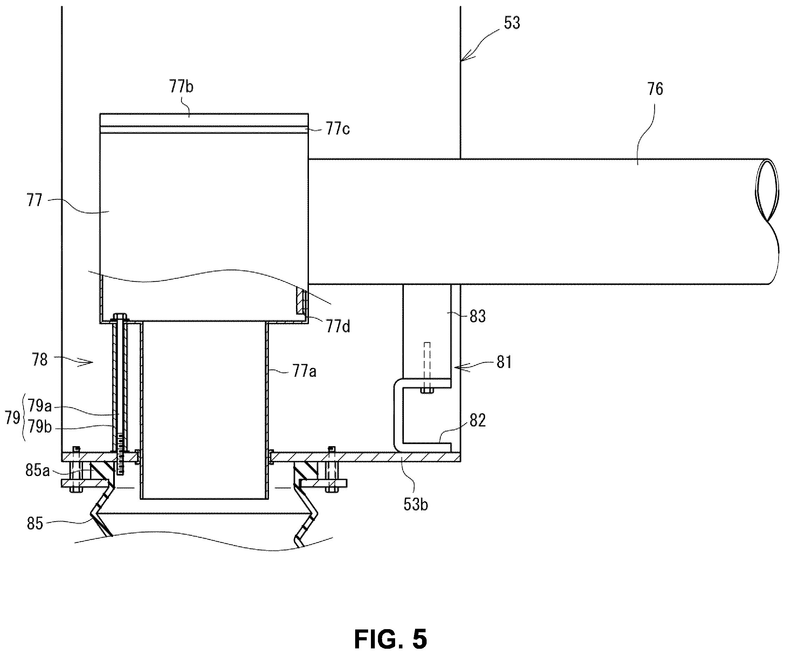

To a bottom portion, of the elevatable member 53, that is below the base link 56a, a base portion of an extendable pipe 76 having a telescopic structure is secured. Specifically, as shown in FIG. 1, a support portion 77 having a hollow cubic shape is provided above a bottom plate 53b of the elevatable member 53. The base portion of the extendable pipe 76 is secured to a side surface of the support portion 77. As shown in FIG. 5, a central portion of a bottom surface of the support portion 77 is provided with a cylindrical portion 77a. The cylindrical portion 77a runs through the bottom plate 53b of the elevatable member 53 and extends downward by an appropriate length, and acts as a part of the air absorption path 18. The support portion 77 is supported at a level higher than the bottom plate 53b by a predetermined distance shorter than the length of the cylindrical portion 77a. The level at which the extendable pipe 76 is supported by the support portion 77 is the same as the level at which the tip link 56b is provided. The cylindrical portion 77a and the bottom plate 53b are made airtight. In FIG. 5, reference sign 77b represents a lid, and reference signs 77c and 77d each represent a sealing member.

The extendable pipe 76 acts as a part of the air absorption path 18 continued to the negative pressure source. The extendable pipe 76 extends and contracts along with the extension and contraction of the extendable arm 51 while being airtight, and is formed of a hard material. A tip of the extendable pipe 76 is connected with a side surface at a base end of the tip portion 56e of the tip link 56b, and an inner space of the extendable pipe 76 and an inner space of the tip portion 56e of the tip link 56b are in communication with each other in an airtight state. That is, the tip link 56b is held by the extendable pipe 76, and a part of the air absorption path 18 is formed from the support portion 77 to the adsorption hand 52.

The support portion 77 holding the extendable pipe 76 is supported by a support structure 78 having a changeable height. The support structure 78 includes the cylindrical portion 77a extending from the bottom surface of the support portion 77 and support legs 79 provided around the cylindrical portion 77a. The support legs 79 keep the support portion 77 and the bottom plate 53b of the elevatable member 53 to be distanced away from each other by a predetermined interval. As shown in FIG. 5, the support legs 79 each include a bolt 79a extending from the support portion 77 and screwed with the bottom plate 53b and a spacer 79b fitted to the bolt 79a. The cylindrical portion 77a extending from the support portion 77 is held by the bottom plate 53b. Therefore, the support legs 79 do not need to have an excessive load capacity and may have a relatively short diameter. The number of the support legs 79 may be decreased.

In addition to the support leg 79, a receiving portion 81 receiving a base end portion (base portion) of the extendable pipe 76 held by the support portion 77 is provided. The receiving portion 81 is provided on a top surface of a tip end, in the front-rear direction, of the bottom plate 53b of the elevatable member 53. The receiving portion 81 includes a bracket 82 secured to the bottom plate 53b and a block-like receiving member 83 detachably attached on the bracket 82. In the case where the bolt 79a and the spacer 79b included in the support leg 79 are replaced with those with different lengths, the level at which the support portion 77 is supported is changed. In the same manner, in the case where the receiving member 83 of the receiving portion 81 is replaced with a member having a different height, the level at which the extendable pipe 76 is held is adjusted. In order to allow such an adjustment to be made flexibly, it is preferred that the extendable pipe 76 is formed to have a long stroke.

A part of the air absorption path 18 continued to the pump 32 is formed between the elevatable member 53 provided with the support portion 77 and a top surface of the movable body 21. The elevatable member 53 moves in the up-down direction with respect to the movable body 21. Therefore, this part of the air absorption path 18 needs to be extendable. For this reason, a bellow tube 85 extending in the up-down direction and extendable is provided between the elevatable member 53 and the top surface of the movable body 21. The bellow tube 85 and the portions where the bellow tube 85 is connected with the elevatable member 53 and the movable body 21 are made airtight, and as a result, an inner space of the bellow tube 85 acts as a part of the air absorption path 18. As shown in FIG. 5, the bellow tube 85 is formed of a flexible and elastic material such as rubber or the like, and includes a brim 85a at each of two ends thereof. The brim 85a is sandwiched and secured to the bottom plate 53b of the elevatable member 53 and the top plate 28 of the movable body 21, and thus airtightness is provided.

The support column 54 holding the elevatable member 53 such that the elevatable member 53 is movable in the up-down direction is provided at a rear end, in the front-rear direction, of the movable body 21, and the holding frame 31 having the pump 32 mounted thereon is provided at a middle, in the front-rear direction, of the movable body 21. Therefore, as shown in FIG. 1, an air flow path 86 changing the position of the air absorption path 18 in the front-rear direction is formed on the top plate 28 of the movable body 21. The air flow path 86 has a thin flat shape having a flat top surface, and is rigid. The top plate 28 and the pump 32 are connected with each other by a hose 87.

In the transfer apparatus 12 having the above-described configuration, a controller (not shown) determines, by computations, which portion of each part 13 to be picked up is to be adsorbed based on the graphical data provided by the cutting device and identification information on each part 13, and also determines, by computations, which moving body 21 includes the pickup arm 11 to be used. Then, the transfer operation by the moving body 21 is started. The transfer operation is generally performed as follows.

First, the elevation mechanism 55 is driven to raise the elevatable member 53 in each of all the movable bodies 21 to a predetermined position. Next, at least one movable body 21 including the selected pickup arm 11, among the movable bodies 21 in the wait portion 23, is driven by the moving motor 26 to move to a position, on the first-stage table 14, corresponding to a specific part 13. After the movable body 21 is stopped, the extension motor 59 and the motor 66 of the rotation mechanism 65 are driven to move the adsorption hand 52 to a position above the part 13 to be picked up or to a position above a portion, of the part 13, to be adsorbed by the adsorption hand 52.

In an initial state before the transfer operation starts, it is preferred that the adsorption hand 52 of the pickup arm 11 is located below the tip link 56b with the absorption opening 72 being directed rearward as represented by the phantom line in FIG. 4. With this arrangement, the pickup arm 11 before being extended has a shortest possible length.

Next, the elevation mechanism 55 drives the elevatable member 53 to be lowered to a predetermined position, and the part 13 is adsorbed to the adsorption hand 52 of the pickup arm 11 by an absorption force of the pump 32 actuated in advance. At the time of adsorption, the open/close shutter 73 in the adsorption hand 52 is opened.

The part 13 adsorbed to the adsorption hand 52 is pulled up, and the pickup arm 11 is also raised along with the rise of the elevatable member 53 by the elevation mechanism 55.

Then, the extendable arm 51 of the pickup arm 11 is extended or contracted when necessary, and as a result, the movable body 21 is driven by the moving motor 26 to move toward a predetermined position on the second-stage table 16. After the movable body 21 is stopped, the elevation mechanism 55 drives the elevatable member 53 and the pickup arm 11 to be lowered, and the open/close shutter 73 in the adsorption hand 52 is closed to release the part 13.

The parts 13 are transferred by repetition of the operation generally described above. The pickup arm 11 is allowed to be compact and lightweight and to have a high shape stability. Therefore, a desired operation is performed accurately and smoothly.

This will be described more specifically. The extendable arm 51 of the pickup arm 11 has a configuration by which the links 56 are moved in association from top to bottom, that is, from the uppermost base link 56a to the lowermost tip link 56b. Therefore, the load to be supported is made more lightweight as compared with a case where the links are extended and contracted while being supported from below. This allows the links to be relatively small and lightweight. In addition, the links may be formed to be long in the longitudinal direction in consideration of the height thereof, so as to have a long stroke.

The pickup arm 11 having such a configuration is provided on the elevatable member 53, and moves in the up-down direction as needed each time the pickup arm 11 is to pick up and release the part 13. Therefore, the extendable arm 51 of the pickup arm 11 does not need to be kept at a high position. In addition, the adsorption hand 52 at the tip of the extendable arm 51 does not need to be provided with an elevation device. Therefore, a portion, in the transfer apparatus 12, in which the pickup arm 11 is located is made compact, lightweight and thin, and thus has a shape stability.

In addition, the extendable pipe 76 is secured to the elevatable member 53, and holds, at the tip thereof, the tip link 56b of the extendable arm 51. Therefore, postures of the extendable arm 51 and the adsorption hand 52, which are movable, are stabilized.

The elements are made compact and lightweight and have a shape stability, for example. Therefore, the movable bodies 21 and the extendable arm 51 are operated with higher precision and more smoothly.

The extendable pipe 76, which provides a shape stability, is originally provided for the air absorption path 18. Therefore, there is no need to provide a separate member, and this contributes to the reduction in size and weight, and makes the pickup arm 11 more compact.

Similarly, the continuous inner space of the tip portion 56e of the tip link 56b and the adsorption hand 52 acts as a part of the air absorption path 18. This also make the pickup arm 11 compact.

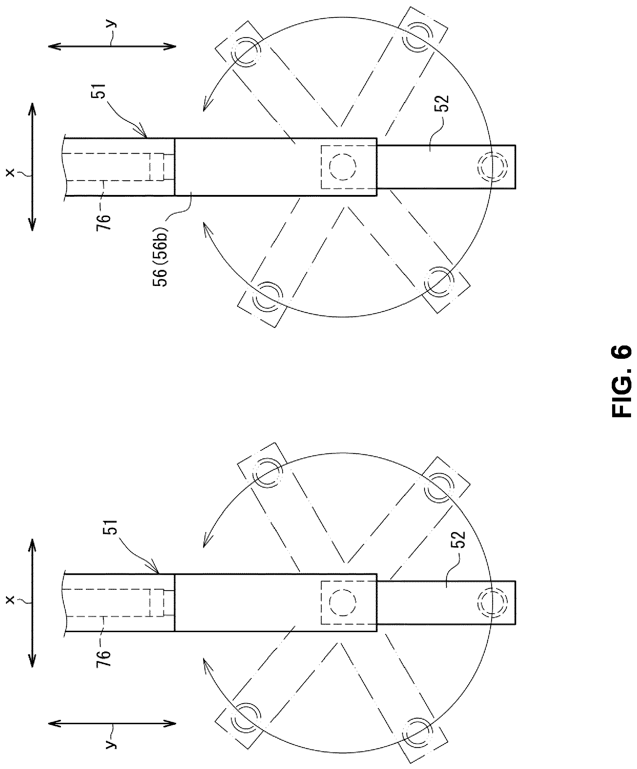

As shown in FIG. 6, the adsorption hands 52 each formed to be long are rotatable by 360 degrees in the horizontal direction. Therefore, in an initial state, the adsorption hand 52 is allowed to be accommodated below the tip link 56b, and this makes the pickup arm 11 compact. In addition, the adsorption hand 52 is controlled together with the extension and contraction of the extendable arm 51 (see arrow y in FIG. 6) and the movement of the movable body 21 (see arrow x in FIG. 6). Therefore, the parts 13 are adsorbed in a wider area.

The transfer operation is performed after the elevatable member 53 is raised. The bellow tube 85 is provided below the elevatable member 53. Therefore, even if the elevation mechanism 55 stops and the elevatable member 53 is lowered, the bellow tube 85 acts as a cushion and provides safety.

The parts 13 are picked up by the pickup arm 11 (extendable arm 51) being raised and lowered. In addition, the support structure 78 is provided to change the level of the support portion 77, which supports the extendable pipe 76. Therefore, even if the height of the extendable arm 51 is changed, that is, even if the number of the links 56 included in the extendable arm 51 is changed, the operation of picking up the parts 13 is not influenced directly. As a result, the support structure 78 may be used to change the level of the support portion 77, so that the number of the links 56 is increased or decreased to change the stroke with no significant work load imposed on an operator.

The above-described configuration is merely of an embodiment to carry out the present invention. The present invention is not limited to the embodiment described above, and may be carried out in any other configuration, as long as this configuration does not depart from the scope of the appended claims.

### [Description of the Reference Numerals]

- 11: pickup arm
- 12: transfer apparatus
- 13: part
- 18: air absorption path
- 21: movable body
- 32: pump
- 51: extendable arm
- 52: adsorption hand
- 53: elevatable member
- 56: link
- 56a: base link
- 56b: tip link
- 59: extension motor
- 65: rotation mechanism
- 76: extendable pipe
- 78: support structure
- 85: bellow tube

## Claims

1. A pickup arm (11) of a transfer apparatus (12) picking up parts (13) obtained as a result of a sheet being cut and transferring the parts (13) to a next stage, the pickup arm (11) being provided on a movable body (21) included in the transfer apparatus (12), the pickup arm (11) comprising:
an extendable arm (51) having a changeable length; and
an adsorption hand (52) provided at a tip of the extendable arm (51) and connected with a negative pressure source generating an absorption force,
wherein:
the extendable arm (51) includes:
a plurality of links (56) stacked in an up-down direction, and
an actuator (74) connected with a base link (56a), which is an uppermost link among the plurality of links (56), the actuator (74) moving the other links (56) in a longitudinal direction thereof to extend and contract the extendable arm (51),
the base link (56a) is secured to a top end of an elevatable member (53) provided on the movable body (21) so as to be movable in the up-down direction,
a base portion (56f) of an extendable pipe (76), having a telescopic structure and acting as a part (13) of an air absorption path (18) continued to the negative pressure source, is secured to a portion, of the elevatable member (53), that is below the base link (56a), and
a tip link (56b), which is a lowermost link among the plurality of links (56) included in the extendable arm (51), is held at a tip of the extendable pipe (76),
**characterized in that** the pickup arm (11) further comprises a support structure (78) provided on a support portion (77) holding the extendable pipe (76), the support structure (78) changing a level of the support portion (77).

2. The pickup arm (11) of the transfer apparatus (12) according to claim 1, wherein the tip link (56b) at the tip of the extendable pipe (76) and the adsorption hand (52) are airtight, and a continuous inner space of the tip link (56b) and the adsorption hand acts as a part (13) of the air absorption path (18) continued to the negative pressure source.

3. The pickup arm (11) of the transfer apparatus (12) according to claim 1 or 2, further comprising a bellow tube (85) extending in the up-down direction and extendable and contractable, the bellow tube (85) being provided between the elevatable member (53) and a top surface of the movable body (21),
the bellow tube (85) and portions where the bellow tube (85) is connected with the elevatable member (53) and the movable body (21) are airtight, and
an inner space of the bellow tube (85) acts as a part (13) of the air absorption path (18) continued to the negative pressure source.

4. The pickup arm (11) of the transfer apparatus (12) according to claim 1 or 2, further comprising a rotation mechanism (65) provided in the tip link (56b), the rotation mechanism (65) rotating the adsorption hand (52) by 360 degrees horizontally.

5. A transfer apparatus (12), comprising the pickup arm (11) of claim 1 or 2.

## Patentansprüche

1. Aufnahmearm (11) einer Transfervorrichtung (12) zum Aufnehmen von Teilen (13), die als Ergebnis des Zuschneidens eines flächigen Gegenstands erhalten werden, und zum Transferieren der Teile (13) zu einer nächsten Stufe, wobei der Aufnahmearm (11) an einem beweglichen Körper (21) vorgesehen ist, der in der Transfervorrichtung (12) enthalten ist, wobei der Aufnahmearm (11) Folgendes aufweist:
einen ausziehbaren Arm (51) mit einer veränderbaren Länge; und
eine Adsorptionshand (52), die an einer Spitze des ausziehbaren Arms (51) vorgesehen und mit einer Unterdruckquelle verbunden ist, die eine Absorptionskraft erzeugt,
wobei:
der ausziehbare Arm (51) Folgendes aufweist:
mehrere Glieder (56), die in einer vertikalen Richtung gestapelt sind, und
einen Aktuator (74), der mit einem Basisglied (56a) verbunden ist, das ein oberstes Glied unter den mehreren Gliedern (56) ist, wobei der Aktuator (74) die anderen Glieder (56) in einer Längsrichtung davon bewegt, um den ausziehbaren Arm (51) auszuziehen und zusammenzuziehen,
das Basisglied (56a) an einem oberen Ende eines anhebbaren Elements (53) befestigt ist, das an dem beweglichen Körper (21) vorgesehen ist, um in der vertikalen Richtung beweglich zu sein,
ein Basisabschnitt (56f) eines ausziehbaren Rohrs (76), das eine Teleskopstruktur aufweist und als ein Teil (13) eines Luftabsorptionswegs (18) wirkt, der sich zu der Unterdruckquelle fortsetzt, an einem Abschnitt des anhebbaren Elements (53) befestigt ist, der sich unter dem Basisglied (56a) befindet, und
ein Spitzenglied (56b), das ein unterstes Glied unter den mehreren Gliedern (56) ist, die in dem ausziehbaren Arm (51) enthalten sind, an einer Spitze des ausziehbaren Rohrs (76) gehalten wird,
**dadurch gekennzeichnet, dass** der Aufnahmearm (11) ferner eine Stützstruktur (78) aufweist, die an einem Stützabschnitt (77) vorgesehen ist, der das ausziehbare Rohr (76) hält, wobei die Stützstruktur (78) eine Höhe des Stützabschnitts (77) ändert.

2. Aufnahmearm (11) der Transfervorrichtung (12) nach Anspruch 1, wobei das Spitzenglied (56b) an der Spitze des ausziehbaren Rohrs (76) und die Adsorptionshand (52) luftdicht sind und ein kontinuierlicher Innenraum des Spitzenglieds (56b) und der Adsorptionshand als ein Teil (13) des Luftabsorptionswegs (18) wirkt, der sich zu der Unterdruckquelle fortsetzt.

3. Aufnahmearm (11) der Transfervorrichtung (12) nach Anspruch 1 oder 2, der ferner ein Balgrohr (85) aufweist, das sich in der vertikalen Richtung erstreckt und ausziehbar und zusammenziehbar ist, wobei das Balgrohr (85) zwischen dem anhebbaren Element (53) und einer oberen Fläche des beweglichen Körpers (21) vorgesehen ist,
das Balgrohr (85) und Abschnitte, an denen das Balgrohr (85) mit dem anhebbaren Element (53) und dem beweglichen Körper (21) verbunden ist, luftdicht sind und
ein Innenraum des Balgrohrs (85) als ein Teil (13) des Luftabsorptionswegs (18) wirkt, der sich zu der Unterdruckquelle fortsetzt.

4. Aufnahmearm (11) der Transfervorrichtung (12) nach Anspruch 1 oder 2, der ferner einen Drehmechanismus (65) aufweist, der in dem Spitzenglied (56b) vorgesehen ist, wobei der Drehmechanismus (65) die Adsorptionshand (52) um 360 Grad horizontal dreht.

5. Transfervorrichtung (12), die den Aufnahmearm (11) nach Anspruch 1 oder 2 aufweist.

## Revendications

1. Bras de prélèvement (11) d'un appareil de transfert (12) prélevant des pièces (13) obtenues à la suite de la coupe d'un objet plat et transférant les pièces (13) à une étape suivante, le bras de prélèvement (11) étant prévu sur un corps mobile (21) inclus dans l'appareil de transfert (12), le bras de prélèvement (11) comprenant :
un bras extensible (51) ayant une longueur modifiable ; et
une aiguille d'adsorption (52) prévue au niveau d'une pointe du bras extensible (51) et reliée à une source de pression négative générant une force d'absorption,
dans lequel :
le bras extensible (51) comprend :
une pluralité de liaisons (56) empilées dans une direction haut-bas, et
un actionneur (74) relié à une liaison de base (56a), qui est une liaison la plus haute parmi la pluralité de liaisons (56), l'actionneur (74) déplaçant les autres liaisons (56) dans une direction longitudinale de celles-ci pour étendre et contracter le bras extensible (51),
la liaison de base (56a) est fixée à une extrémité supérieure d'un élément relevable (53) prévu sur le corps mobile (21) de manière à être mobile dans la direction haut-bas,
une partie de base (56f) d'un tuyau extensible (76), ayant une structure télescopique et agissant comme une partie (13) d'un trajet d'absorption d'air (18) continuant jusqu'à la source de pression négative, est fixée à une partie, de l'élément relevable (53), qui est en dessous de la liaison de base (56a), et
une liaison de pointe (56b), qui est une liaison la plus basse parmi la pluralité de liaisons (56) incluses dans le bras extensible (51), est maintenue au niveau d'une pointe du tuyau extensible (76),
**caractérisé en ce que** le bras de prélèvement (11) comprend en outre une structure de support (78) prévue sur une partie de support (77) maintenant le tuyau extensible (76), la structure de support (78) modifiant un niveau de la partie de support (77).

2. Bras de prélèvement (11) de l'appareil de transfert (12) selon la revendication 1, dans lequel la liaison de pointe (56b) au niveau de la pointe du tuyau extensible (76) et l'aiguille d'adsorption (52) sont étanches à l'air, et un espace intérieur continu de la liaison de pointe (56b) et de l'aiguille d'adsorption agit comme une partie (13) du trajet d'absorption d'air (18) continuant jusqu'à la source de pression négative.

3. Bras de prélèvement (11) de l'appareil de transfert (12) selon la revendication 1 ou 2, comprenant en outre un tube à soufflet (85) s'étendant dans la direction haut-bas et extensible et contractable, le tube à soufflet (85) étant prévu entre l'élément relevable (53) et une surface supérieure du corps mobile (21),
le tube à soufflet (85) et des parties où le tube à soufflet (85) est relié à l'élément relevable (53) et au corps mobile (21) sont étanches à l'air, et
un espace intérieur du tube à soufflet (85) agit comme une partie (13) du trajet d'absorption d'air (18) continuant jusqu'à la source de pression négative.

4. Bras de prélèvement (11) de l'appareil de transfert (12) selon la revendication 1 ou 2, comprenant en outre un mécanisme de rotation (65) prévu dans la liaison de pointe (56b), le mécanisme de rotation (65) faisant tourner l'aiguille d'adsorption (52) de 360 degrés horizontalement.

5. Appareil de transfert (12), comprenant le bras de prélèvement (11) selon la revendication 1 ou 2.
